Europäisches Patentamt

European Patent Office

Office européen des brevets

(19)

(11) **EP 0 838 258 B1**

(12) **EUROPEAN PATENT SPECIFICATION**

(45) Date of publication and mention
of the grant of the patent:
**13.06.2001 Bulletin 2001/24**

(51) Int Cl.[7]: **B01D 71/02**, B01D 69/14,
C01B 3/50

(21) Application number: **97870159.7**

(22) Date of filing: **21.10.1997**

(54) **Proton conductive membrane**

Protonen leitende Membran

membrane conductrice de protons

(84) Designated Contracting States:
**BE DE DK ES FR GB IT NL PT SE**

(30) Priority: **21.10.1996 ZA 9608811**

(43) Date of publication of application:
**29.04.1998 Bulletin 1998/18**

(73) Proprietor: **"VLAAMSE INSTELLING VOOR
TECHNOLOGISCH ONDERZOEK",
afgekort "V.I.T.O."
2400 Mol (BE)**

(72) Inventors:
 • **Belyakov, Vladimir Nikolaevich
  Kiev 225, 253225 (UA)**
 • **Linkov, Vladimir Mikhailovich
  Somerset West 7130 (ZA)**

(74) Representative: **Van Malderen, Michel et al
Office van Malderen
Place Reine Fabiola 6/1
1083 Bruxelles (BE)**

(56) References cited:
 **EP-A- 0 398 208       EP-A- 0 652 042
 DE-A- 19 527 785      US-A- 4 710 278**

## Description

### Field of the invention

This invention relates to an inorganic proton-conductive ceramic membrane for separating hydrogen from a mixture of gases. It further relates to a method for preparing such a ceramic membrane. The invention further relates to the use of said ceramic membranes for the separation of hydrogen gas from a mixture of gases.

### State of the art

Hydrogen is one of the most important raw materials in chemical industry. It is expected that in the foreseeable future hydrogen consumption will increase drastically due to its use as an ecologically clean fuel.

Among existing hydrogen generation methods the most pure gas is obtained by means of electrolysis of water [Chemical Encyclopaedia, v.1, Soviet Encyclopaedia (1988)400.]. This process is not widely used in industry due to high energy requirements. Less costly hydrogen generation methods are based on the natural gas or oil conversion by steam or carbon monoxide. The most serious disadvantage of this method is low hydrogen purity due to the presence of CO, $CO_2$, $CH_4$ and $H_2O$. Large quantities of hydrogen are formed during hydrocracking and catalytic reforming of oil fractions. The impurities present in this case are mainly the products of such processes.

As a rule, existing hydrogen purification processes comprise several stages based on well developed methods such as absorption, adsorption, rectification of liquidised gas and fractionation condensation [Chemical Encyclopedia, v.1, Soviet Encyclopaedia(1988)461.]. Multiple stage processes drastically increase the cost of hydrogen.

Membrane separation is regarded nowadays as the method with most perspective for production of purified hydrogen and, according to comparative evaluation presented in US-A-4,265,745, is becoming increasingly cost effective. The availability of membrane materials which are either selectively permeable for hydrogen, or, alternatively, allow for penetration of various gasses other than hydrogen, makes it possible to develop a one-stage hydrogen purification process.

Some of the best known hydrogen separation membranes, which have also found some limited industrial applications, are thin Pd or Pd-alloy films. The separation process is based in this case on the ability of hydrogen to dissolve in palladium and diffuse through it. The fact that no other gasses are soluble in palladium manifests itself in extremely high selectivity (>1000) which is suitable for one stage hydrogen purification. The drawback of palladium membranes results from the mechanism of hydrogen permeation through them. It is based on the diffusion through a nonporous solid material, where the diffusion rate is determined by the equation:

$$D = k \, P^a, \qquad 0,5 < a < 1,0$$

where k is a constant and P is pressure.

Under those conditions any considerable hydrogen permeability can be obtained at high pressures only. Serious disadvantages of palladium membranes are their low diffusion constant values and their extremely high cost. Various palladium alloy membranes with higher diffusion constant and lower cost have been introduced in recent years [Y. Sakamoto, F.L. Chen, M. Furukawa, N. Noguchi, J. Alloy and Comp., 185 (1992) 191, Y. Sakamoto, F.L. Chen, Y. Kinari, J. Alloy and Comp., 205 (1994) 205].

Other successful hydrogen separation membranes are based on polymeric materials [W.J. Koros, G.K. Fleming, J. Membr. Sci., 83 (1993) 1], porous ceramics [Inorganic membranes, R.R. Bhave ed., Van Nostrand Reinolds, NY, 1991, p. 155., R.J.R. Uhlhorn, K. Keiser, A.J. Burgraaff, J. Membr. Sci., 66 (1992) 259.], zeolite molecular sieves [PCT Patent WO-A-90/092231 (23.08.1990), Meng-Dong Jia, K.V. Reinemann, R.D. Behling, J. Membrane Sci., 82 (1993) 15] and molecular sieving carbons [W.J. Koros, G.K. Fleming, J. Membr. Sci., 83 (1993) 1].

A different and very promising class of hydrogen separation membranes is based upon the use of proton-conductors. At present two main types of proton conductors are known. The first type includes comparatively wide spectrum of materials of oxide and sulfide nature [H. Iwahara, H. Uchida, N. Naeda, Solid State Ionics, 11 (1992) 109 ; K.G. Frase, G.C. Farrington, J.O. Thomas, Ann. Rev. Mater. Sci., 14 (1984) 279 ; N.G. Khainovsky, E.F. Khairetdinov, Izv. Akad. Nauk USSR, Ser. Khim, 17 (1986) 84.]. As a rule such materials do not contain protons and are capable of proton inclusion and transport due to the existence of cation exchange sites in their structures [F.M. Ingberger, J. Non-Crystal. Solids, (1980) 39]. The formation of such sites and therefore any considerable proton conductivity in such materials occurs at elevated temperatures only.

Low temperature proton transport occurs in the proton conductors of a second type. It comprises most of solid inorganic poly-acids, i.e. proton containing compounds. The proton conductive properties of such materials have been studied in great detail. It has been established that only polyantimonic acids and acidic phosphates of multivalent metals exhibit proton transport of considerable value [N.G. Khainovsky, E.F. Khairetdinov, Izv. Akad. Nauk USSR, Ser. Khim, 17(1986) 84]. In polyantimonic acids, protons are located in the channels of the crystalline structure. In acidic polyphosphates of zirconium and titanium, protons (which are a part of phosphate groups) form layers between metal atoms. In both cases the concentration of protons in specific directions and comparatively low distances between protons result.

If a proton conductor of the second type is placed between two electrodes and a potential drop is applied, the movement of protons from anode to cathode will occur. If hydrogen molecules are present at the anode side of the material, their oxidation to protons will take place, these newly formed protons will enter the material and, after travelling to cathode according to the mixed conductivity transport mechanism will be reduced back to hydrogen molecules. This process results in hydrogen separation from the rest of the species present at the anode side.

The described mechanism allows for development of selective membrane materials for low temperature hydrogen separation by means of polyantimonic acid or acidic polyphosphate membranes. The membrane selectivity in this case will be determined by the possibility of oxidation of any particular gas to a cation form. An example of the use proton-conductive materials in gas separation membranes is presented in EP 0470822 where a method is described for the preparation of proton conductive membrane materials from certain oxides and sulfides of multivalent metals. Only high temperature (>500°C) proton conductivity and as a result, hydrogen separation, has been observed.

Although no description of low temperature proton conducting membrane materials was found in the literature, such materials were used as hydrogen sensors [H. Iwahara, H. Uchida, N. Naeda, Solid State Ionics, 11 (1992) 109], solid separators of protons in solutions [GB-A-1571116 ; JP-A- 50-14553 (10.08.1977)] and gas fuel cells [N.G. Khainovsky, E.F. Khairetdinov, Izv. Akad. Nauk USSR, Ser. Khim, 17 (1986) 84].

In US-A-4,617,029, a process for separating a mixture of gases with a selectively permeable membrane is described. The material responsible for the selectivity reacts reversibly with the gas being separated.

In EP-A-0470822, a composite metal membrane is disclosed. The membrane comprises a proton conductive layer between two hydrogen-permeable metal layers. The proton conductive layer refers to any material that shows complex ion motion at high temperatures, especially oxides and sulfides of molybdenum, silicon, tungsten and vanadium.

In EP-A-0347667, a zirkonyl phosphate ceramic membrane and a process for its fabrication are disclosed. The membrane has high mechanical and thermal stability. These membranes however show low porosity.

In EP-A-0697594, an ion selective ceramic membrane is disclosed. These membranes are formed of lanthanide phosphate doped with on or more metals from group IIa of the Periodic Table.

In US-A-4,710,278, an apparatus and method for separating a gaseous mixture containing hydrogen gas using a membrane is described.

A reason for unavailability of polyphosphate or polyantimonic acid membranes for hydrogen separation is that previously these materials were processed only in disperse form. Self-supporting membranes can be formed from disperse materials by the agglomeration methods only and therefore would possess low mechanical strength and high electrical resistance at contact sites. The formation of materials with better mechanical properties would require higher firing temperatures (>1000°C) resulting in loss of the proton conducting structure (see EP A 0347667).

## Aims of the invention

The first aim of the invention is to provide a method for the preparation of a low temperature proton conductive membrane. These membranes preferably have high mechanical strength and a suitable electrical resistance. A second aim of the invention is to provide a low temperature proton conductive membrane. A third aim of the invention is to enable a low temperature separation of hydrogen gas from a mixture of gases. Another aim of the invention is to provide a sensor that can measure the activity of hydrogen gas in a mixture of gases at low temperature. Another aim of the present invention is to provide an ion-conductive membrane for the separation of mixtures of olefins and paraffins and the preparation and use of such a membrane.

## General description of the invention

The preparation method according to the invention comprises the following subsequent steps :

- introduction of a multivalent metal salt and/or a multivalent metal oxide sol in a porous ceramic membrane matrix, and
- treatment with phophoric acid of the membrane for introduction of cation exchange groups.

With multivalent metal, a metal that can has several possible positive valence states is meant. Preferably, said cation exchange group is a phosphate group. In a preferred embodiment, the two subsequent steps described higher are executed more than once.

Said multivalent metal preferably comprises Zr. Said preparation method can further comprise an impregnation with $Ag^+$ ions. The preparation method can further comprise the introduction of electroconductive layers on the membrane surface, preferably followed by regeneration of the cation exchange groups by treatment with an ammonia solution followed by a heat treatment.

Another embodiment of the present invention is a porous ceramic membrane obtainable by the preparation method according to invention. The ceramic membrane can be a tubular ceramic membrane and/or have pores with a diameter of at least 0.2 $\mu$m and preferably at least 0.3 $\mu$m. The ceramic membrane can further comprise impregnated $Ag^+$ ions. A ceramic membrane according to the invention can further comprise depositions of electroconductive coatings onto the surface of the membrane on which an externally applied potential can be applied as a driving force for hydrogen separation. Said depositions of electroconductive coatings onto the surface of the membrane preferably increase hydrogen permeability and selectivity by catalysing proton formation from hydrogen molecules and/or by enhancing the formation of a hydrogen electrochemical cell and/or by levelling the surface electrochemical potential of the membrane.

Another embodiment of the invention is the use of a ceramic membrane disclosed higher, particularly for the separation of $H_2$ from a mixture of gases. A ceramic membrane as disclosed higher can also be used as a sensor for hydrogen activity in a gas. A further embodiment of the invention is the use of a ceramic membrane impregnated with $Ag^+$ ions for the separation of olefin/paraffin mixtures.

Brief description of the figures :

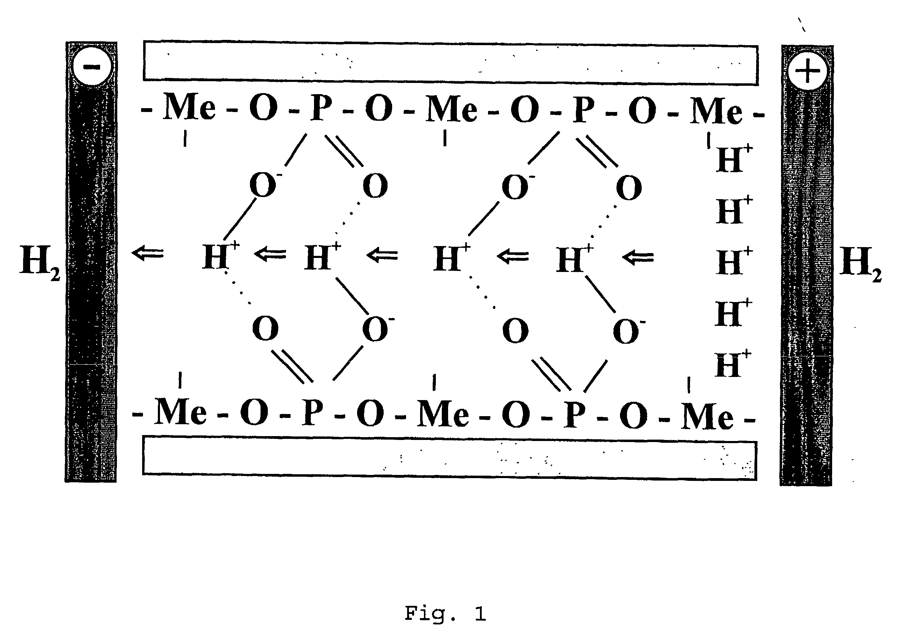

Figure 1 describes the hydrogen separation by proton conductivity in polyphosphates.

Figure 2 discloses an apparatus for gas permeability experiments.

Figure 3 discloses the relationship between the permeability of hydrogen and helium gas through ceramic based membranes and the number of consecutive impregnations with zirconium phosphate.

Figure 4 describes the relationship between hydrogen selectivity for different gas mixtures and the number of consecutive impregnations with zirconium phosphate for membranes with electroconductive coatings.

Figure 5 describes the relationship between hydrogen selectivity for different gas mixtures and the number of consecutive impregnations with zirconium phosphate for membranes without electroconductive coatings.

Figure 6 discloses a separation cell suitable for separating a pentane/pentene mixture.

In the examples, we used Zr as multivalent metal and polyphosphates as inorganic poly-acids. In order to improve mechanical properties of zirconium polyphosphates and enable precise control over the pore structures of resulting membranes these materials were impregnated into matrices of porous ceramic membranes. The membranes described in the ZA-A-965323 were used as supports in the impregnation operation. The porous structure of such membranes allowed for impregnation of significantly large quantities of polyphosphate while the shape and mechanical properties of initial ceramic membranes remained unchanged.

The most widely used method for zirconium phosphate preparation is based on the reaction of aqueous solutions of zirconium salts with phosphoric acid or its salts [V.N. Belyakov, D.Sc. Thesis, Kiev, 1992.]. The products of such reactions have amorphous structure and high water content. The drying of such compounds at temperatures up to 200 °C results in removal of water and densification of the structure of the material which is accompanied by considerable decrease in the polyphosphate particle volume (1-5 fold depending on the drying conditions). A significant decrease in the volume of polyphosphate particles is undesirable as far as its impregnation into the ceramic membrane porous structure is concerned. It results in the micro-crack formation leading to destructurisation of interparticle contact areas and finally to a decrease in proton conductivity.

It was therefore decided to use alternative method of zirconium phosphate impregnation during the preparation of proton conducting hydrogen separation membranes. The methods are known for preparation of crystallised sols of zirconia [A. Clearfield, J. Inorg. Chem., 3 (1964) 146] which retain their particle sizes after drying, because the crystalline structure of the sol particles does not allow for densification. It is known that the treatment of disperse zirconia with phosphoric acid results in formation of zirconium phosphate [Ch. Amflett, Inorganic ion exchangers, Mir, Moscow, 1966.]. This transformation leads to an increase in the volume occupied by zirconium phosphate particles in comparison with that of initial zirconia. This volume increase is attributed to introduction of a large number of phosphate groups during the cleavage of oxide bonds according to the reaction:

$$\equiv Zr\text{-}O\text{-}Zr\equiv\ +\ 2H_3PO_4 \rightarrow\ \equiv Zr\text{-}PO_4H_2 + H_2PO_4\text{-}Zr\equiv$$

As a result, the phosphate generated in the membrane matrix should fill the pores densely. In this way good contact between phosphate particles will occur.

Based on the above considerations the following method has been developed for the preparation of ion conductive membranes by means of introduction of zirconium phosphate into the porous structure of ceramic membranes.

Example 1 :

Preparation of a membrane according to the invention

Tubular ceramic membranes ( as described in ZA-A-965323) were immersed in 1M zirconia sol for 12 h. The sol was prepared by neutralization of 1 M solution of $ZrOCl_2$ by 25% ammonia solution at 80 °C followed by refluxing for 27 h. After removal from the sol the membrane surfaces were wiped with filter paper and the membranes were immersed in 15% solution of phosphoric acid for 15 h. After the phosphoric acid treatment the membranes were thoroughly washed with distilled water, air-dried for 24 h at room temperature and then at 200 °C for 2-3 h.

In order to obtain better filling of the membrane porous structure with zirconium phosphate the described above impregnation procedure was repeated up to 5 times.

The proton conductivity based hydrogen separation process requires as a driving force a drop in electrical potential between the membrane surfaces. The potential drop can occur internally if the electrochemical cell is formed in the membrane structure or can be applied externally by means of electric current leads connected to the membrane surfaces. In order to enhance the electrochemical cell formation and/or to enable the application of potential drop generated by an external power source, electroconductive metal coatings were deposited onto the membrane surfaces.

Due to the fact that the electrical conductivity of initial ceramic membranes is very low, it was decided to use an electroless method for plating of metal coatings (electrodes) on both inside and outside membrane surfaces. Nickel was used as a plating metal due to its high anti-corrosion stability and low cost in comparison with platinum group metals and silver which are more widely used as electrode coatings.

In electroless plated coatings nickel is present mostly as alloy with phosphorus or boron [M. Shluger, Applied electrochemistry, Khimia, Moscow, 1982.]. Such coatings are prepared by reduction of nickel ions from solutions containing sodium hypophosphite or boron compounds. Taking into account that zirconium phosphate was responsible for ion conductive properties of the newly developed membranes it was decided to use sodium hypophosphite as a reducing agent.

It is known that spontaneous reduction of nickel ions takes place in the presence of iron group metals, aluminium and palladium. It was necessary to activate the membrane surfaces prior to the nickel deposition by introducing one of these metals. It was decided to use palladium for the activation due to its ability to act as a catalyst in the hydrogen disproportionation reaction:

$$H_2 \rightarrow 2H,$$

which is important for proton formation during hydrogen separation by proton conductive membranes.

The nickel electroless plating method that allowed for the formation of coatings with high porosity and good adhesion to ceramic surfaces was chosen [M. Shluger, Applied electrochemistry, Khimia, Moscow, 1982.].

Example 2 :

Deposition of electroconductive coatings onto the surface of proton-conductive membranes.

Before the nickel deposition operation the membranes were treated in the aqueous solution of the following composition:

| | |
|---|---|
| $Na_3PO_4$ | 20 g/l |
| $Na_2CO_3$ | 20 g/l. |

The treatment was carried out at 60 °C for 10 min; it was followed by washing in distilled water for 10 min. The first stage of the deposition operation was the introduction of palladium which was done by immersing the membranes in the following aqueous solution:

| | |
|---|---|
| $PdCl_2$ | 0,5 g/l |
| HCl | 5 ml/l |

The solution temperature was 35-40 °C, the duration of the treatment was 5 min with consecutive washing in distilled water for 1-2 min.

Nickel deposition was realised using the electroless plating bath of the following composition:

| | |
|---|---|
| $NiSO_4$ x $7H_2O$ | 30 g/l |
| $NaH_2PO_2$ x $H_2O$ | 10 g/l |
| $NaCH_3COO$ | 10 g/l |
| $Na_3C_6O_7H_5$ x $2H_2O$ | 10 g/l |
| Aminoacetic acid | 10g/l |
| pH of solution | 5,0 - 5,2 |
| Temperature | 90 °C |

The nickel deposition rate was 20 $\mu$m / h. The required thickness of the nickel layer was 10$\mu$m, the plating time therefore was 30 min.

After the nickel deposition operation the membranes were washed in distilled water for 1 min. The chemical composition of the coating was as follows:

Ni - 94%

P - 6%.

Taking into account that the nickel plating bath contained large quantities of cations and that zirconium phosphate present inside the ceramic membrane matrix was a material with strong cation exchange properties, it was expected that proton-conducting characteristics of the membranes would be hindered by the plating operation. In order to avoid this it was necessary to remove adsorbed cations from the membranes.

Because the treatment with concentrated acids (1-2 M $HNO_3$ and $H_2SO_4$) widely used for regeneration of cation exchange materials would lead to deterioration of the nickel coating, an alternative cation removal method was used for this purpose. The membranes were treated with a 25% ammonia solution for 24 h resulting in substitution of cations by ammonia ions:

$$\equiv P - O^-Cat^+ + NH_4^+ \rightarrow \equiv P - O^-NH_4^+ + Cat^-.$$

This was followed by the heat treatment at 200 °C for 2 h, resulting in the formation of acidic polyphosphate:

$$\equiv P - O^-NH_4^+ \rightarrow \equiv P - O^-H^+ + NH_3$$

Measurement of gas permeability

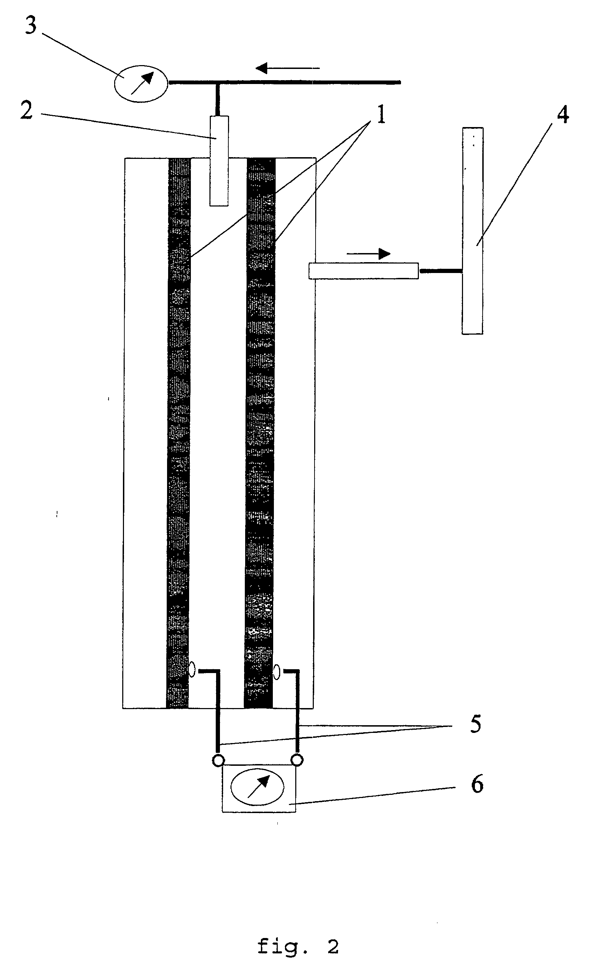

The schematic of the installation used for gas permeability experiments is shown in Figure 2. Feed gasses were introduced into the inner lumen of tubular ceramic based membranes 1 which were 105 mm long through gas inlet 2 (3 is a pressure gauge). Atmospheric pressure was maintained at the other side of the membranes. Volumetric equipment 4 was used to measure permeability of pure gasses. Current leads 5 were connected to inside and outside membrane surfaces. The electric potential drop across the membrane wall was measured by a millivoltmeter 6, external potential was applied by means of a potentiostate 6.

The following pure gases were used in the permeability experiments: hydrogen, helium, argon, nitrogen, methane and propane.

Example 3

Permeability measurement

The proton conductive membranes for initial gas permeability experiments were produced by the impregnation of zirconium phosphate into the porous structure of tubular ceramic membranes and the deposition of electroconductive coatings onto their surfaces. The ceramic membranes used as supports had pore diameters of 0.2 $\mu$m and porosity of 40%.

Hydrogen permeability through the membranes without externally applied potential drop was directly proportional to the number of consecutive phosphate impregnation operations as illustrated in Table 1.

Table 1.

| Hydrogen permeability through ceramic based membranes in relation to number of zirconium phosphate impregnation operations. | |
| --- | --- |
| Number of impregnations | Permeability, $m^3 / m^2$ h atm |
| 2 | 1.22 |
| 3 | 1.36 |
| 4 | 1.42 |
| 5 | 1.53 |

Higher number of phosphate impregnation operations resulted in an increase in proton concentration inside the membrane matrix. An increase in hydrogen permeability with the number of impregnations testified to the proton conductivity mechanism of hydrogen transport through the membranes.

Although no external electric potential was applied to the membrane surfaces, a potential drop across the membrane wall in the range from 10 to 200 mV, depending on the number of impregnations and hydrogen pressure, was observed. It was also found that the hydrogen permeability maximum was reached at approximately 30 min after the start of the experiment; the permeability was constant afterwards. No such time - permeability relationship was observed for any other gasses studied. With an increase in hydrogen permeability the potential drop across the membrane wall decreased and reached the constant value at approximately the same time as the constant permeability was established.

The permeability - potential drop relationship indicated above was due to the formation of a hydrogen electrochemical cell in the proton conductive membrane [V.V. Scortcheletti, Theoretical electrochemistry, Khimia, Leningrad, 1969]. The electromotive force occurring in the cell is determined by the hydrogen partial pressure at two sides of the membrane; zirconium phosphate acts as a solid electrolyte . At the starting point of the experiment the difference in hydrogen concentrations at opposite sides of the membranes was at its maximum resulting in a maximum potential drop. The subsequent decrease in potential drop was due to a smaller difference in hydrogen concentrations at two membrane sides. The ceramic component of the membrane possesses certain electron conductivity and allows for electrons formed on the anode side of the membrane during oxidation of hydrogen to take part in its reduction on the cathode side. Thus hydrogen transport through the ceramic based membrane can take place without externally applied potential drop.

The application of external electric potential allows to control hydrogen permeability through the membranes. With an increase in external potential the permeability increased and reached a constant value at a potential drop of about 0.25 V.

Example 4 :

Membranes with improved hydrogen selectivity.

Based on the initial permeability experiments, the following alterations to the membrane structure were affected in order to improve hydrogen transport through the ceramic based membranes:

- Ceramic membranes with larger pore diameters (0.3 $\mu$m) and higher porosity (50%) were used as supports for the zirconia phosphate impregnation and the deposition of electroconductive coatings.

- In the zirconium phosphate impregnation operation the immersion time of membranes in zirconia sol was increased from 12 h to 48 h.

- The number of consecutive zirconium phosphate impregnation operations was increased from 5 to 7.

The nature of the pressure/permeability relationships for the modified membranes appeared to be similar to that of initial membranes.

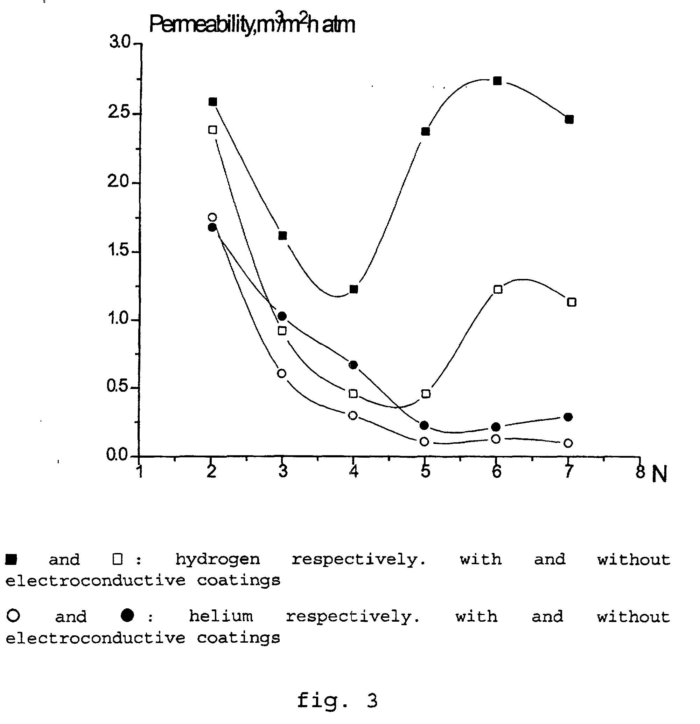

The relationship between the permeability of hydrogen and helium through the modified ceramic based membranes and the number of consecutive impregnations of zirconium phosphate is illustrated in Figure 3. For both gasses the membranes with and without surface nickel coatings were tested. With more impregnation operations the $H_2$ permeability through membranes with and without nickel coating decreased initially and, after 4-5 consecutive impregnations started to increase. The limit in $H_2$ permeability occurred after 6 consecutive impregnation operations. It was also noticeable that the nickel coated membranes exhibited significantly higher $H_2$ permeability than those without metal coatings. This was due to the equalisation of the surface electrochemical potential of the membranes in the presence of nickel layer and catalytic action of palladium in the reaction of hydrogen disproportionation.

In the case of He permeability a steady decrease was observed with an increase in the number of consecutive impregnations from 1 to 5. More or less constant permeability values were maintained afterwards. No pronounced difference in the performance of the membranes with and without electroconductive coatings was observed.

The comparison between $H_2$ and He permeabilities through the ceramic based membranes showed that the drop in flow rates of both gasses after 4-5 consecutive impregnation operations was due to the reduction in pore sizes and total porosity of the membranes. Further pore filling with zirconium phosphate resulted in higher proton conductivity and in higher $H_2$ permeability values in comparison with those for He. The presence of permeability limits on both hydrogen curves testifies to that assumption, because the number of protons that can be introduced by the impregnation of zirconium phosphate into the ceramic membrane support is limited by its pore volume.

It is clear from the data represented in Table 1 and Figure 3 that the use of a higher porosity ceramic membrane support allowed for nearly 1,5 fold increase in hydrogen permeability.

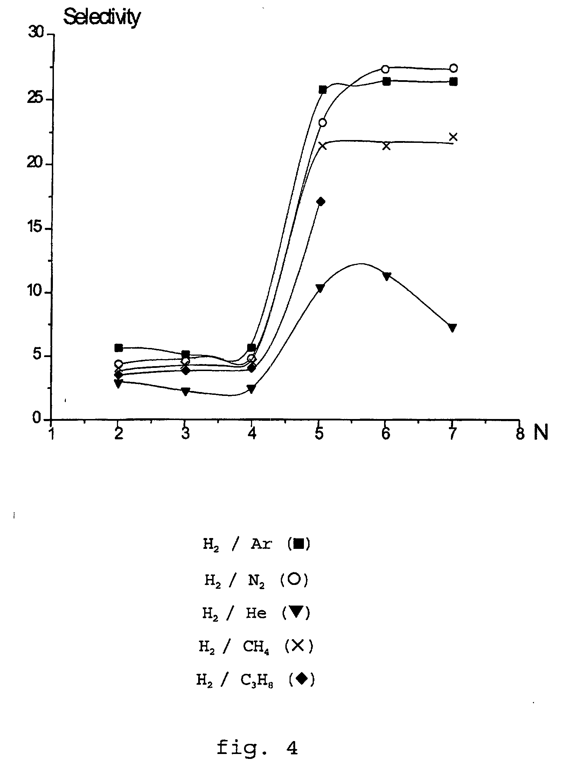

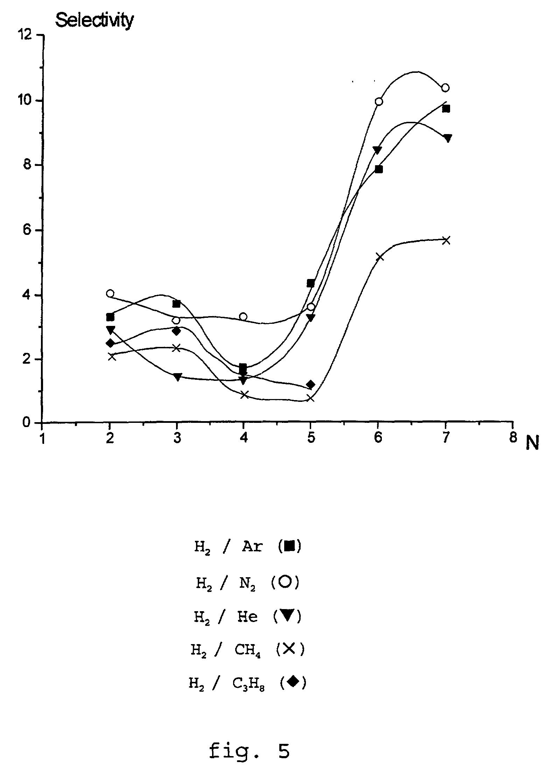

The proton conductivity effect conferred onto ceramic membranes by the impregnation of zirconium phosphate into their porous structure resulted in high hydrogen selectivity of the membranes. In Figures 4 and 5 hydrogen selectivities are given for ceramic based membranes with and without electroconductive surface coatings. It can be seen from the figures that the membranes filled with zirconia phosphate to a lower degree were less hydrogen selective. In this case selectivities are only slightly higher than the theoretical Knudsen values. An increase in the number of consecutive impregnations leads to higher proton conductivity of the membranes an finally to higher hydrogen selectivities. A maximum in hydrogen selectivity was achieved after 5-6 consecutive impregnations.

The data of pure gas permeability experiments through the ceramic based membranes with improved hydrogen selectivity are summarised in Table 2.

Table 2.

| Maximum hydrogen selectivities of ceramic based membranes with and without electroconductive metal coatings | | | | | |
|---|---|---|---|---|---|
| | Selectivity | | | | |
| | $H_2$/He | $H_2$/Ar | $H_2$/$N_2$ | $H_2$/$CH_4$ | $H_2$/$C_3H_8$ |
| With metal coating | 12.15 | 26.39 | 27.44 | 22.85 | 16.95 |
| Without metal coating | 9.29 | 9.87 | 10.58 | 5.7 | 4.47 |
| Knudsen selectivity | 1.41 | 4.47 | 3.74 | 2.83 | 4.69 |

A comparison between hydrogen selectivities of ceramic based membranes impregnated with zirconium phosphate and various hydrogen selective membranes developed earlier is given in Table 3.

Permeability is given for gasses in brackets

It is clear from table 3 that the low temperature permeability of the newly developed ceramic based membranes is superior to that of many previously known membrane products. Although hydrogen permeability of the membrane 3 is higher, it does not exhibit good hydrogen selectivity towards gasses with small molecular sizes.

Another serious advantage of the newly developed ceramic based membranes is that their preparation technology allows for manufacturing of large membrane quantities in the tubular form.

The selectivities of polymeric membranes for hydrogen separation lie in the region between 30 and 100, which is somewhat higher than those of the newly developed ceramic based membranes. However, the permeabilities of polymeric membranes are quite low and in many cases are below 10 barrers. The permeability of the newly developed ceramic based membranes reaches 70000 Barrers.

It also should be noted that for gas mixtures where the partial pressure of hydrogen is quite low and not all protons present in the membrane matrix take part in the hydrogen transport, the use of externally applied electric potential across the membrane wall will result in more drastic increase in hydrogen permeability than was observed in pure gas experiments

| No. | Membrane type | Gas mixture | Temperature (K) | Selectivity | Permeability (mol/m²secPa) | Source |
|-----|---------------|-------------|-----------------|-------------|-----------------------------|--------|
| 1 | Glass modified with silica | $H_2/N_2$ ($H_2$) | 723 | 2000 | $1 \times 10^{-8}$ | [27] |
| 2 | same | $H_2/Ar$ ($H_2$) | 523 | 24 | $0.5 \times 10^{-8}$ | [28] |
| 3 | Alumina modified with silica | $H_2/C_3H_6$ ($H_2$) | 473 | 160 | $161 \times 10^{-8}$ | [29] |
| 4 | Carbon molecular sieve | $He/N_2$ (He) | 1123 | 22 | $27 \times 10^{-8}$ | [30-32] |
| 5 | Zeolite molecular sieve | $H_2/N_2$ ($H_2$) | 293 | 3 | $23 \times 10^{-8}$ | [11] |
| 6 | High temperature proton conductive | $H_2$ | 923 | – | $0.4 \times 10^{-8}$ | [17] |
| 7 | Low temperature proton conductive | $H_2/N_2$ ($H_2$) | 293 | 26 | $33 \times 10^{-8}$ | This patent |

*Table 3. Comparison of newly developed ceramic based membranes with literature results*

[11]Meng-Dong Jia, K.V. Reinemann, R.D. Behling, J. Membrane Sci., 82 (1993) 15 ; [17]EP 0470822 A1 (12.02.1992) ; [27]Gavalas, C. Mergiris, S.W. Nam, Chem. Eng. Sci., 44 (1989) 1829 ; [28]Okubo, H. Inove, J. Membr. Sci., 42 (1989) 109 ; [29]Uhlhorn, K. Keiser, A.J. Burgraaff, J. Membr. Sci., 66 (1992) 271 ; [30]Koresh, A. Soffer, J. Chem. Soc. Faraday Trans. 76 (1980) 2457 ; [31]Koresh, A. Soffer, J. Chem. Soc. Faraday Trans. 76 (1980) 2472 ; [32]Koresh, A. Soffer, Sep. Sci. Technol., 18 (1983) 723.

EP 0 838 258 B1

The membranes according to the invention can be active in the separation of olefin/paraffin mixtures by means of facilitated transport. In the facilitated transport process, permeate molecules are carried through membrane by means of special chemical components of the membrane structure (carrier molecules) forming a reversible complex with the permeate. This takes place due to the specificity of the complexation reaction of carriers and permeate molecules. The separation of olefin/paraffin mixtures is especially effective using metal-based facilitated transport which is endorsed by the complex forming reaction between the metal ion and the double bond of the olefin. Silver ions ($Ag^+$) are the most effective carriers in olefin transport. This property is conferred to membranes according to the invention without electroconductive surface layers by introduction of $Ag^+$ ions into the matrix of the inorganic poly-acids by means of an ion-exchange process with or without preliminary conversion of the poly-acids into the hydrogen form.

Example 5 :

Preparation of an inorganic membrane for olefin/paraffin separation :

A tubular zirconium phosphate containing ion-conductive membrane without electroconductive surface layers was immersed into 1 M $HNO_3$ during 12 hours. The resulting membrane in the hydrogen form was washed with deionised water during 1 hour and immersed into an $AgNO_3$ solution containing 0,02 mol/l $Ag^+$. The silver impregnation operation resulted in the deposition of 0,038 mg-eq/g $Ag^+$ ions.

Example 6

Separation of a pentene/pentane mixture using the membrane from example 5 :

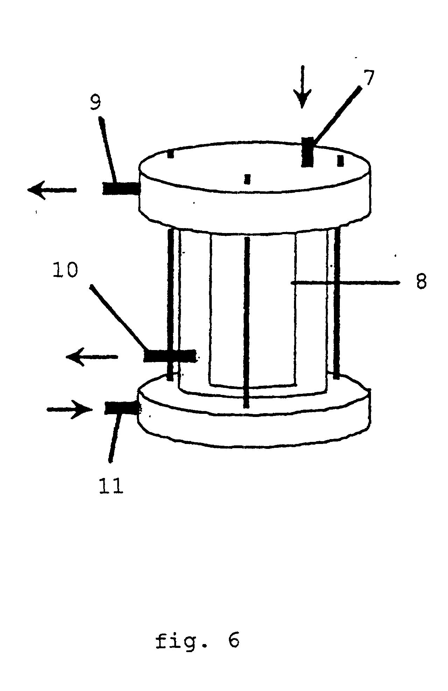

The silver impregnated membrane (8) as obtained in example 5 was used in the separation of a pentene/pentane mixture (50/50) using the separation cell represented in figure 6. The separation cell comprises a feed inlet 11, feed outlet 9, strip inlet 7 and strip outlet 10

The result of this experiment is a separation with a separation factor of 9.

## Claims

1. Preparation method comprising impregnation of an inorganic proton conductive material into matrices of porous ceramic membranes, said method comprises the following subsequent steps :

    - introduction of a multivalent metal salt and/or a multivalent metal oxide sol in a porous ceramic membrane matrix, and
    - treatment of the membrane with phosphoric acid for introduction of cation exchange groups.

2. Preparation method according to claim 1 or 2, characterised in that the subsequent steps of claim 1 are executed more than once.

3. Preparation method of a membrane as in any of the claims 1 to 2, characterised in that the cation exchange groups comprise phosphate groups.

4. Preparation method as in any of the claims 1 to 3, characterised in that said multivalent metal comprises Zr.

5. Preparation method as in any of the claims 1 to 4, characterised in that it further comprises impregnating the ceramic membrane with $Ag^+$ ions.

6. Preparation method as in any of the claims 1 to 5, characterised in that it further comprises the step of introducing electroconductive layers.

7. Preparation method as in claim 6, characterised in that the step of introduction of electroconductive layers comprises the following steps :

    - deposition of a metal layer on the membrane surface, and
    - regenerating the cation exchange groups of the membrane.

**8.** Preparation method as in claim 7, characterised in that the step of regenerating the cation exchange groups of the membrane comprises an ammonia treatment followed by a heat treatment.

**9.** Ceramic membrane obtainable by a method comprising the steps of :

- introducing a multivalent metal salt and/or a multivalent metal oxide sol in a porous ceramic membrane matrix, and
- treating the membrane with phosphoric acid for introduction of cation exchange groups.

**10.** Ceramic membrane as in claim 9, characterised in that the ceramic membrane is a tubular ceramic membrane.

**11.** Ceramic membrane as in claim 9 or 10, characterised in that the ceramic membrane further comprises pores with a diameter of at least 0.2 $\mu$m, preferably at least 0.3 $\mu$m.

**12.** Ceramic membrane as in any of the claims 9 to 11, characterised in that the ceramic membrane further comprises impregnated $Ag^+$.

**13.** Ceramic membrane as in any of the claims 9 to 12, characterised in that the ceramic membrane further comprises depositions of electroconductive coatings onto the surface of the membrane on which an externally applied potential can be applied as a driving force for hydrogen separation.

**14.** Ceramic membrane as in any of the claims 9 to 13 characterised in that the ceramic membrane further comprises depositions of electroconductive coatings onto the surface of the membrane that increase hydrogen permeability and selectivity by catalysing proton formation from hydrogen molecules and/or by enhancing the formation of a hydrogen electrochemical cell and/or by levelling the surface electrochemical potential of the membrane.

**15.** Use of a ceramic membrane as in any of the claims 9 to 14 for gas separation, particularly for the separation of $H_2$ from a mixture of gases.

**16.** Use of a ceramic membrane as in any of the claims 9 to 14 as a sensor for hydrogen activity in a gas.

**17.** Use of a ceramic membrane as in claim 12 for the separation of a mixture of an alkane and an alkene.

**Patentansprüche**

**1.** Herstellungsmethode, aufweisend die Imprägnierung eines anorganischen, protonleitenden Materials in Grundmassen aus porösen, keramischen Membranen, wobei die Methode die folgenden aufeinanderfolgenden Schritte aufweist:

- Einführung eines mehrwertigen Metallsalzes und/oder eines mehrwertigen Metalloxidsols in eine poröse, keramische Membrangrundmasse, und
- Behandlung der Membran mit Phosphorsäure zur Einführung von Kationenaustauschgruppen.

**2.** Herstellungsmethode gemäß Anspruch 1 oder 2, dadurch gekennzeichnet, daß die aufeinanderfolgenden Schritte des Anspruchs 1 mehr als einmal ausgeführt werden.

**3.** Herstellungsmethode für eine Membran, wie in Anspruch 1 oder 2, dadurch gekennzeichnet, daß die Kationenaustauschgruppen Phosphatgruppen aufweisen.

**4.** Herstellungsmethode wie in irgendeinem der Ansprüche 1 bis 3, dadurch gekennzeichnet, daß das mehrwertige Metall Zr aufweist.

**5.** Herstellungsmethode wie in irgendeinem der Ansprüche 1 bis 4, dadurch gekennzeichnet, daß sie weiterhin eine Imprägnierung der keramischen Membran mit $Ag^+$-Ionen aufweist.

**6.** Herstellungsmethode wie in irgendeinem der Ansprüche 1 bis 5, dadurch gekennzeichnet, daß sie weiterhin den Schritt aufweist, bei dem elektrisch leitende Schichten eingeführt werden.

**7.** Herstellungsmethode wie in Anspruch 6, dadurch gekennzeichnet, daß der Schritt, bei dem elektrische leitende Schichten eingeführt werden, die folgenden Schritte aufweist:

- Ablagerung einer Metallschicht auf der Membranoberfläche, und
- Regenerierung der Kationenaustauschgruppen der Membran.

**8.** Herstellungsmethode wie in Anspruch 7, dadurch gekennzeichnet, daß der Schritt, bei dem die Kationenaustauschgruppen der Membran regeneriert werten, eine Ammoniakbehandlung aufweist, auf die eine Wärmebehandlung folgt.

**9.** Keramische Membran, erhältlich nach einer Methode, welche die folgenden Schritte aufweist:

- Einführung eines mehrwertigen Metallsalzes und/oder eines mehrwertigen Metalloxidsols in eine poröse, keramische Membrangrundmasse, und
- Behandlung der Membran mit Phosphorsäure zur Einführung von Kationenaustauschgruppen.

**10.** Keramische Membran wie in Anspruch 9, dadurch gekennzeichnet, daß die keramische Membran eine rohrförmige keramische Membran ist.

**11.** Keramische Membran wie in Anspruch 9 oder 10, dadurch gekennzeichnet, daß die keramische Membran weiterhin Poren mit einem Durchmesser von mindestens 0,2 $\mu$m, vorzugsweise mindestens 0,3 Am, aufweist.

**12.** Keramische Membran wie in irgendeinem der Ansprüche 9 bis 11, dadurch gekennzeichnet, daß die keramische Membran weiterhin imprägniertes $Ag^+$ aufweist.

**13.** Keramische Membran wie in irgendeinem der Ansprüche 9 bis 12, dadurch gekennzeichnet, daß die keramische Membran weiterhin Ablagerungen von elektrisch leitenden Beschichtungen auf der Oberfläche der Membran aufweist, an die ein extern angelegtes Potential als eine treibende Kraft für die Wasserstoffabtrennung angelegt werden kann.

**14.** Keramische Membran wie in irgendeinem der Ansprüche 9 bis 13, dadurch gekennzeichnet, daß die keramische Membran weiterhin Ablagerungen von elektrisch leitenden Beschichtungen auf der Oberfläche der Membran aufweist, welche die Wasserstoffpermeabilität und die Wasserstoffselektivität erhöhen durch Katalysierung der Protonbildung aus Wasserstoffmolekülen und/oder durch Erhöhung der Bildung einer elektrochemischen Wasserstoffzelle und/oder durch Nivellierung des elektrochemischen Oberflächenpotentials der Membran.

**15.** Verwendung einer keramischen Membran wie in irgendeinem der Ansprüche 9 bis 14 für die Gasabtrennung, insbesondere für die Abtrennung von $H_2$ aus einem Gemisch von Gasen.

**16.** Verwendung einer keramischen Membran wie in irgendeinem der Ansprüche 9 bis 14 als ein Sensor für die Wasserstoffaktivität in einem Gas.

**17.** Verwendung einer keramischen Membran wie in Anspruch 12 für die Trennung eines Gemischs aus einem Alkan und einem Alken.

**Revendications**

**1.** Procédé de préparation comprenant l'imprégnation d'un matériau inorganique conducteur de protons dans des matrices de membranes céramiques poreuses, ledit procédé comprenant les étapes ultérieures suivantes :

- introduction d'un sel métallique multivalent et/ou d'un sol d'oxyde métallique multivalent dans une matrice de membrane céramique poreuse, et
- traitement de la membrane par de l'acide phosphorique pour l'introduction de groupes échangeurs de cations.

**2.** Procédé de préparation selon la revendication 1 ou 2, caractérisé en ce que les étapes ultérieures de la revendication 1 sont exécutées plus d'une fois.

3. Procédé de préparation d'une membrane selon la revendication 1 ou 2, caractérisé en ce que les groupes échangeurs de cations comprennent des groupes phosphate.

4. Procédé de préparation selon l'une quelconque des revendications 1 à 3, caractérisé en ce que ledit métal multivalent comprend du Zr.

5. Procédé de préparation selon l'une quelconque des revendications 1 à 4, caractérisé en ce qu'il comprend en outre l'imprégnation de la membrane céramique par des ions $Ag^+$.

6. Procédé de préparation selon l'une quelconque des revendications 1 à 5, caractérisé en ce qu'il comprend en outre l'étape d'introduction de couches électroconductrices.

7. Procédé de préparation selon la revendication 6, caractérisé en ce que l'étape d'introduction de couches électroconductrices comprend les étapes suivantes :

   - dépôt d'une couche de métal sur la surface de la membrane, et
   - régénération des groupes échangeurs de cations de la membrane.

8. Procédé de préparation selon la revendication 7, caractérisé en ce que l'étape de régénération des groupes échangeurs de cations de la membrane comprend un traitement à l'ammoniac suivi d'un traitement thermique.

9. Membrane céramique pouvant être obtenue par un procédé comprenant les étapes consistant :

   - à introduire un sel métallique multivalent et/ou un sol d'oxyde métallique multivalent dans une matrice de membrane céramique poreuse, et
   - à traiter la membrane à l'acide phosphorique pour introduire des groupes échangeurs de cations.

10. Membrane céramique selon la revendication 9, caractérisée en ce que la membrane céramique est une membrane céramique tubulaire.

11. Membrane céramique selon la revendication 9 ou 10, caractérisée en ce que la membrane céramique comprend en outre des pores d'un diamètre d'au moins 0,2 m, de préférence d'au moins 0,3 m.

12. Membrane céramique selon l'une quelconque des revendications 9 à 11, caractérisée en ce que la membrane céramique comprend en outre de l'$Ag^+$ imprégné.

13. Membrane céramique selon l'une quelconque des revendications 9 à 12, caractérisée en ce que la membrane céramique comprend en outre des dépôts de revêtements électroconducteurs sur la surface de la membrane sur laquelle un potentiel appliqué extérieurement peut être appliqué comme force d'entraînement pour la séparation de l'hydrogène.

14. Membrane céramique selon l'une quelconque des revendications 9 à 13, caractérisée en ce que la membrane céramique comprend en outre des dépôts de revêtements électroconducteurs sur la surface de la membrane qui augmentent la perméabilité à l'hydrogène et la sélectivité en catalysant la formation de protons de molécules d'hydrogène et/ou en améliorant la formation d'une cellule électrochimique à l'hydrogène et/ou en nivelant le potentiel électrochimique de surface de la membrane.

15. Utilisation d'une membrane céramique selon l'une quelconque des revendications 9 à 14 pour la séparation de gaz, en particulier pour la séparation de $H_2$ d'un mélange de gaz.

16. Utilisation d'une membrane céramique selon l'une quelconque des revendications 9 à 14 comme capteur de l'activité de l'hydrogène dans un gaz.

17. Utilisation d'une membrane céramique selon la revendication 12 pour la séparation d'un mélange d'un alcane et d'un alcène.

Fig. 1

fig. 2

fig. 3

H$_2$ / Ar (■)

H$_2$ / N$_2$ (○)

H$_2$ / He (▼)

H$_2$ / CH$_4$ (✗)

H$_2$ / C$_3$H$_8$ (◆)

fig. 4

H$_2$ / Ar (■)

H$_2$ / N$_2$ (O)

H$_2$ / He (▼)

H$_2$ / CH$_4$ (✕)

H$_2$ / C$_3$H$_8$ (◆)

fig. 5

fig. 6